(19) Europäisches Patentamt

European Patent Office

Office européen des brevets

(11) **EP 0 563 796 B1**

(12) **EUROPÄISCHE PATENTSCHRIFT**

(45) Veröffentlichungstag und Bekanntmachung des Hinweises auf die Patenterteilung:
**28.01.1998 Patentblatt 1998/05**

(51) Int. Cl.$^6$: **B32B 27/32**

(21) Anmeldenummer: **93104971.2**

(22) Anmeldetag: **25.03.1993**

(54) **Seidenmatte, biaxial orientierte Polyolefin-Mehrschichtfolie, Verfahren zu ihrer Herstellung und ihre Verwendung**

Satin-matt, biaxially orientated polyolefin multilayer film, process for its manufacture, and use

Film multicouche en polyoléfine, biaxialement orienté et à surface matte-satinée, procédé de sa fabrication et usage

(84) Benannte Vertragsstaaten:
**BE DE ES FR GB IT NL**

(30) Priorität: **02.04.1992 DE 4210969**

(43) Veröffentlichungstag der Anmeldung:
**06.10.1993 Patentblatt 1993/40**

(73) Patentinhaber:
**HOECHST AKTIENGESELLSCHAFT**
**65926 Frankfurt am Main (DE)**

(72) Erfinder:
• **Murschall, Ursula, Dr.**
  **W-6505 Nierstein (DE)**
• **Speith, Angela**
  **W-6500 Mainz (DE)**
• **Schlögl, Gunter, Dr.**
  **W-6233 Kelkheim (DE)**

(56) Entgegenhaltungen:
EP-A- 0 011 796          EP-A- 0 122 495
EP-A- 0 365 463          EP-A- 0 394 550
EP-A- 0 538 746          US-A- 4 578 316

**Beschreibung**

Die Erfindung betrifft eine Polypropylen-Mehrschichtfolie welche mindestens eine Basisschicht und mindestens eine Deckschicht umfaßt, wobei die Basisschicht Polypropylen mit einem Schmelzpunkt von mindestens 140 C enthält und die Deckschicht eine Mischung zweier Mischungskomponenten I und II enthält. Die Komponente I der Mischung ist ein Polypropylenhomopolymeres oder ein Copolymeres aus "-Olefinen mit 2 bis 10 Kohlenstoffatomen oder ein Terpolymeres aus "-Olefinen mit 2 bis 10 Kohlenstoffatomen oder eine Mischung aus zwei oder mehreren der genannten Homo-, Co- und Terpolymeren oder ein Blend aus zwei oder mehreren der genannten Homo-, Co- und Terpolymeren. Die Komponente II der Mischung ist ein High Density Polyethylen (HDPE) oder ein Blend aus HDPE und einem oder mehreren weiteren Polymeren, ausgewählt aus der Gruppe Polypropylenhomopolymer, Copolymer aus "-Olefinen mit 2 bis 10 Kohlenstoffatomen, Terpolymer aus "-Olefinen mit 2 bis 10 Kohlenstoffatomen, und ein Blend aus Co- und Terpolymeren aus "-Olefinen mit 2 bis 10 Kohlenstoffatomen.

Die erfindungsgemäße Deckschicht zeichnet sich durch einen charakteristischen seidenmatten Glanz aus.

Die Erfindung betrifft ferner ein Verfahren zur Herstellung der Mehrschichtfolie sowie ihre Verwendung.

Die deutsche Patentanmeldung P 41 35 096.0 offenbart Polyolefin-Mehrschichtfolien aus einer Polypropylen-Basisschicht und einer Deckschicht aus einem HDPE-Blend. Dieses HDPE-Blend besteht aus HDPE und Co- und/oder Terpolymeren aus "-Olefinen und gegebenenfalls Polypropylen. Die Deckschicht der Mehrschichtfolie weist einen minimalen Glanz und eine minimale Trübung auf, wodurch der Folie ein charakteristisches mattes Aussehen verliehen wird.

Aus der DE-A-16 94 694 sind Mehrschichtfolien bekannt, die aus biaxial orientierten Polypropylenfolien bestehen und mindestens eine heißsiegelfähige Schicht aus einem Ethylen-Propylen-Copolymeren enthalten. Diese Folien besitzen eine gute Heißsiegelbarkeit, sie sind klar und nicht im erwünschten Maße kratzfest und zeigen zudem ungenügende Verarbeitungseigenschaften auf schnellaufenden Verpackungsmaschinen.

Aus der EP-A-0 008 904 ist eine beidseitig siegelbare, biaxial orientierte dreischichtige Polyolefinfolie bekannt, bei der die Basisschicht aus Propylenpolymeren und die beiden Siegelschichten aus siegelbaren Olefinpolymeren gebildet sind. Diese Polyolefinfolie ist jedoch transparent und insbesondere nur wenig kratzfest und nicht bedruckbar. Darüber hinaus läßt sie auch hinsichtlich ihrer Gleiteigenschaften in Hinblick auf schnellaufende Verpackungsmaschinen mehrfach zu wünschen übrig.

Eine weitere beidseitig siegelbare, biaxial orientierte Polyolefinfolie mit drei Schichten ist aus der US-A-4 419 411 bekannt. Bei diesen Folien ist in beiden Siegelschichten Polysiloxan und Siliciumdioxid als Additivkombination inkorporiert. Die Basisschicht besteht im wesentlichen aus Polypropylen und enthält eine geringe Menge Monocarbonsäureamid, welches teilweise von der Basisschicht in die beiden Siegelschichten migriert. Die beschriebene Polyolefin-Mehrschichtfolie soll einen besonders niedrigen Reibungskoeffizienten aufweisen. Dieser Folie haftet besonders der Nachteil an, daß sie nicht bedruckbar ist.

Aus der US-A-4 578 316 ist eine biaxial orientierte Polyolefin-Mehrschichtfolie bekannt, deren Basisschicht aus einem Polypropylen-Homopolymeren und deren Deckschicht aus einem Blend von Polypropylen und MDPE und/oder HDPE besteht. Diese Polyolefinfolie besitzt einen niedrigen Reibungskoeffizienten in Verbindung mit einer gut benetzbaren Oberfläche; jedoch weist auch dieser Film eine ausgezeichnete optische Klarheit auf.

In der WO 89/10839 werden Polyolefin-Mehrschichtfolien beschrieben, deren Basisschicht aus einem Polypropylenpolymeren und deren Deckschichten entweder aus HDPE oder einem Ethylen-Propylen-Copolymeren oder einem Polypropylen bestehen, wobei die Folie bei speziellen Temperaturbedingungen gestreckt wird. Sie besitzt insbesondere einen niedrigen Reibungskoeffizienten und eine gute Benetzbarkeit, aber gleichzeitig auch einen hohen Glanz und eine geringe Trübung.

Dem allgemeinen Stand der Technik ist zu entnehmen, daß für die unterschiedlichen Anwendungen der Polypropylenfolien unterschiedliche Eigenschaften und insbesondere spezielle Kombinationen der einzelnen Qualitätsmerkmale gefordert sind.

Die EP-A-0 367 613 offenbart eine Mehrschichtfolie aus einer vakuolenhaltigen Polypropylen-Basisschicht und einer Deckschicht, welche beschriftbar ist und ein erstes Polymer mit einem Schmelzflußindex von $\leq 1$ g/10 min und ein zweites Polymeres enthält, welches mit dem besagten ersten Polymeren inkompatibel ist. Als Beispiel für das erste Polymer ist ein HDPE mit einer Dichte von 0,92 bis 0,97 g/cm$^3$ beschrieben. Das inkompatible Polymer ist ein Polypropylen oder Copolymere des Polypropylens oder Terpolymere des Polypropylens. Die beschriebene Folie hat ein opakes Aussehen, d. h. sie ist im wesentlichen lichtundurchlässig. Es ist beschrieben, daß die Folie ein mattes Aussehen bekommt, wenn sie mit einer Bedruckung versehen wird. Es ist bevorzugt, in die Deckschicht zusätzlich einen Füllstoff einzuarbeiten, welcher die Beschreibbarkeit verbessern soll, wobei gleichzeitig die SiO$_2$-haltige Deckschicht eine hohe Mattigkeit aufweist, die der Folie ein papierähnliches Aussehen verleiht. Die beschriebene Folie weist eine Dichte von 0,69 g/cm$^3$ auf. Diese Folie ist für viele Verwendungszwecke aufgrund ihrer Opazität nicht einzusetzen. Die matte, SiO$_2$-haltige Oberfläche erweist sich bei der Bedruckung als verbesserungswürdig. Die Farbe zeigt einen Grauschleier und kein gleichmäßiges Erscheinungsbild. Dies wird auf Inhomogenitäten zurückgeführt, welche in der Folie selbst durch ihre Opazität nicht erscheinen, aber beim Bedrucken herauskommen.

Als Materialien mit seidenmattem Erscheinungsbild wurden bisher überwiegend Acetatfolien eingesetzt. Die Herstellung dieser Acetatfolien ist jedoch mit erheblichen Umweltbelastungen verbunden. Darüber hinaus läßt die Beständigkeit dieser Materialien in feuchter Umgebung stark zu wünschen übrig. Es besteht daher ein wachsender Bedarf, Acetatfolien in den bisherigen Anwendungsbereichen zu ersetzen, wobei die Substitutionsprodukte dem charakteristischen seidenmatten Erscheinungsbild der Acetatfolien möglichst nahekommen sollen.

Die Aufgabe der vorliegenden Erfindung bestand daher darin, eine Mehrschichtfolie zur Verfügung zu stellen, die durch ein seidenmattes Erscheinungsbild mindestens einer Oberfläche gekennzeichnet ist. Die Trübung und der Glanz der Oberfläche/n sollen im Hinblick auf diese gewünschte seidenmatte Charakteristik optimiert sein. Dabei ist gleichzeitig eine homogene Folienoptik ohne fleckige oder streifige Störstellen wichtig. Zusätzlich wird eine hohe und langzeitbeständige Oberflächenspannung der Deckschicht gefordert, damit deren gute Bedruckbarkeit gewährleistet ist. Gleichzeitig wird ein gleichmäßiges Erscheinungsbild der Bedruckung gefordert.

Je nach ihrem Verwendungszweck soll die Folie gegebenenfalls zusätzlich mindestens eine Deckschicht mit guten Siegeleigenschaften, insbesondere mit einem großen Siegelbereich und einer guten Heißsiegelbarkeit, aufweisen. Zusätzlich werden für den gegebenenfalls vorgesehenen Einsatz auf schnelllaufenden Verpackungsmaschinen gute Laufeigenschaften und eine geringe Reibung gefordert.

Erfindungsgemäß wird diese Aufgabe gelöst durch eine Mehrschichtfolie der eingangs genannten Gattung, wobei die Mischungskomponente I im wesentlichen

ein Polypropylenhomopolymeres oder
ein Copolymeres von

Ethylen und Propylen oder
Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder

ein Terpolymeres von

Ethylen und Propylen und Butylen oder
Ethylen und Propylen und einem anderen $\alpha$-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,

enthält und
die Mischungskomponente II im wesentlichen ein HDPE oder ein Blend zweier Blendkomponenten A und B enthält, wobei
die Blendkomponente A im wesentlichen

ein HDPE ist und

die Blendkomponente B im wesentlichen

ein Polypropylenhomopolymeres oder
ein Copolymeres von

Ethylen und Propylen oder
Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder

ein Terpolymeres von

Ethylen und Propylen und Butylen oder
Ethylen und Propylen und einem anderen $\alpha$-Olefin mit 5 bis 10 Kohlenstoffatomen oder

eine Mischung aus zwei oder mehreren der genannten Homo-, Co- und Terpolymeren oder

ein Blend aus zwei oder mehreren der genannten Homo-, Co- und Terpolymeren

ist und die Folie seidenmatt ist.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepreßte Formkörper kleiner Größe, z. B. linsen- oder kugelförmiges Granulat, zusammengeschüttet und mit einer geeigneten Rüttelvorrichtung mechanisch gemischt.

Ein Blend im Sinne der vorliegenden Erfindung ist ein legierungsartiger Verbund der einzelnen Komponenten, welcher nicht mehr in die ursprünglichen Bestandteile zerlegt werden kann. Ein Blend weist Eigenschaften wie ein homogener Stoff auf und kann entsprechend durch geeignete Parameter charakterisiert werden.

Die Basisschicht der erfindungsgemäßen Mehrschichtfolie besteht im wesentlichen aus einem Propylenpolymer und gegebenenfalls zugesetzten Additiven in jeweils wirksamen Mengen. Das Polypropylenpolymere enthält zum überwiegenden Teil (mindestens 90 %) Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 5 Gew.-% oder weniger, Copolymere von Propylen mit $C_4$-$C_8$-$\alpha$-Olefinen mit einem $\alpha$-Olefingehalt von 5 Gew.-% oder weniger stellen bevorzugte Propylenpolymere für die Basisschicht dar, wobei isotaktisches Polypropylen besonders bevorzugt ist. Das Propylenpolymere der Basisschicht hat im allgemeinen einen Schmelzflußindex von 0,5 g/10 min bis 10 g/10 min, vorzugsweise 1,5 g/10 min bis 4 g/10 min, bei 230 °C und einer Kraft von 21,6 N (DIN 53 735). Die angegebenen Gewichtsprozente beziehen sich auf das jeweilige Copolymer. Die Additive der Basisschicht sollen die Struktur der Basisschicht nicht verändern. Insbesondere werden keine Füllstoffe von dem Begriff "Additive" umfaßt. Füllstoffe sind nach allgemeiner Terminologie partikelförmige Zusatzstoffe, welche vakuolenartige Leerräume in der Schicht erzeugen. Die erfindungsgemäße Folie weist eine im wesentlichen transparente, d. h. eine nicht vakuolenhaltige Basisschicht auf.

Mindestens eine Deckschicht der erfindungsgemäßen Mehrschichtfolie enthält eine im folgenden näher beschriebene Mischung zweier Komponenten I und II und gegebenenfalls zugesetzte Additive.

Die Mischungskomponente I der Deckschichtmischung enthält im wesentlichen

ein Polypropylenhomopolymer oder
ein Copolymer von

Ethylen und Propylen oder
Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder

ein Terpolymer von

Ethylen und Propylen und Butylen oder
Ethylen und Propylen und einem anderen $\alpha$-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren.

Besonders bevorzugt besteht die Mischungskomponente I im wesentlichen aus

einem Polypropylenhomopolymeren oder aus
einem Copolymeren von

Ethylen und Propylen oder
Ethylen und Butylen-1 oder
Propylen und Butylen-1 oder aus

einem Terpolymeren von

Ethylen und Propylen und Butylen-1 oder aus

einer Mischung aus zwei oder mehreren der genannten besonders bevorzugten Homo-, Co- und Terpolymeren oder aus

einem Blend aus zwei oder mehreren der genannten besonders bevorzugten Homo-, Co- und Terpolymeren, gegebenenfalls gemischt mit einem oder mehreren der genannten Homo-, Co- und Terpolymeren,

wobei insbesondere Polypropylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von mindestens 50 Gew.-%
und einem Butylen-1-Gehalt von 10 bis 40 Gew.-%,
jeweils bezogen auf das Gesamtgewicht des Polymerblends,

bevorzugt sind.

Das als oder in der Mischungskomponente I eingesetzte Polypropylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere der Mischungskomponente I bzw. das in dieser enthaltene Homopolymere hat im allgemeinen einen Schmelzflußindex von 0,5 g/10 min bis 15 g/10 min, vorzugsweise 1,5 g/10 min bis 6 g/10 min, bei 230 °C und einer Kraft von 21,6 N (DIN 53 735).

Die Mischungskomponente II der Deckschichtmischung enthält im wesentlichen ein HDPE oder ein Blend, welches im wesentlichen HDPE als Blendkomponente A und eine Blendkomponente B umfaßt.

Unter HDPE werden im Sinne der vorliegenden Erfindung Hochdruckpolyethylene verstanden, welche die folgenden Eigenschaften aufweisen:

1. Der Schmelzflußindex MFI, gemessen nach DIN 53 735 oder ISO 1133 bei 50 N/190 °C, liegt im Bereich von 0,2 bis 50 g/10 min, vorzugsweise größer 1 bis 45 g/10 min, insbesondere 5 bis 35 g/10 min.
2. Die Viskositätszahl, gemessen nach DIN 53 728, Teil 4, oder ISO 1191, liegt im Bereich von 100 bis 450 $cm^3$/g, vorzugsweise 120 bis 280 $cm^3$/g.
3. Die Kristallinität beträgt 35 bis 80 %, vorzugsweise 50 bis 80 %.
4. Die Dichte, gemessen bei 23 °C nach DIN 53 479, Verfahren A, oder ISO 1183, liegt im Bereich von 0,93 bis 0,97 $g/cm^3$, vorzugsweise 0,95 bis 0,96 $g/cm^3$.
5. Der Schmelzpunkt, gemessen mit DSC (Maximum der Schmelzkurve, Aufheizgeschwindigkeit 20 °C/min), liegt zwischen 120 und 150 °C, vorzugsweise zwischen 125 und 135 °C).

Das HDPE als alleinige Mischungskomponente als auch HDPE als Blendkomponente A wird aus den vorstehend beschriebenen Polyethylenen ausgewählt, so daß als Mischungskomponente I grundsätzlich das gleiche HDPE wie als Blendkomponente A in Frage kommt.

Die Blendkomponente B besteht im wesentlichen aus

einem Polypropylenhomopolymeren oder aus
einem Copolymeren von

Ethylen und Propylen oder
Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder aus

einem Terpolymeren von

Ethylen und Propylen und Butylen oder
Ethylen und Propylen und einem anderen $\alpha$-Olefin mit 5 bis 10 Kohlenstoffatomen oder aus

einer Mischung aus zwei oder mehreren der genannten Homo-, Co- und Terpolymeren oder aus
einem Blend aus zwei oder mehreren der genannten Homo-, Co- und Terpolymeren.

Besonders bevorzugt besteht die Blendkomponente B im wesentlichen aus

einem Polypropylenhomopolymeren oder aus
einem Copolymeren von

Ethylen und Propylen oder
Ethylen und Butylen-1 oder
Propylen und Butylen-1 oder aus

einem Terpolymeren von

Ethylen und Propylen und Butylen-1 oder aus

einer Mischung aus zwei oder mehreren der genannten besonders bevorzugten Homo-, Co- und Terpolymeren
oder aus
einem Blend aus zwei oder mehreren der genannten besonders bevorzugten Homo-, Co- und Terpolymeren,

wobei insbesondere Polypropylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von mindestens 50 Gew.-%
und einem Butylen-1-Gehalt von 10 bis 40 Gew.-%
jeweils bezogen auf das Gesamtgewicht des Polymerblends,

bevorzugt sind.

Das als oder in der Blendkomponente B eingesetzte Polypropylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen bevorzugt ist. Das Homopolymere der Blendkomponente B bzw. das in dieser enthaltene Homopolymere hat im allgemeinen einen Schmelzflußindex von 0,5 g/10 min bis 15 g/10 min, vorzugsweise 1,5 g/10 min bis 6 g/10 min, bei 230 °C und einer Kraft von 21,6 N (DIN 53 735).

Das **Verhältnis** (Gewichtsverhältnis) der beiden Blendkomponenten A und B liegt zwischen A:B = 20:80 und A:B = 80:20, vorzugsweise zwischen A:B = 40:60 und A:B = 60:40, und liegt insbesondere bevorzugt bei A:B = 45:55.

Das Blend aus den Komponenten A und B hat einen **Schmelzflußindex** (DIN 53 735 bei 230 °C und 21,6 N Belastung) von 1,5 g/10 min bis 12 g/10 min, vorzugsweise von 2,5 g/10 min bis 6 g/10 min, wobei der Schmelzflußindex des Blends bevorzugt höher liegt als jener des Propylenpolymeren der Basisschicht.

Der **Schmelzbereich** des Blends liegt zwischen 100 und 160 °C, vorzugsweise zwischen 120 und 150 °C.

Das Verhältnis (Gewichtsverhältnis) der beiden Mischungskomponenten I und II der Deckschichtmischung kann innerhalb weiter Grenzen variieren und richtet sich nach dem beabsichtigten Einsatzzweck der Mehrschichtfolie. Bevorzugt liegt das Verhältnis der Mischungskomponenten I und II in einem Bereich von I:II = 10:90 bis I:II = 90:10, vorzugsweise zwischen I:II = 30:70 bis I:II = 70:30, insbesondere bei I:II = 50:50.

Die erfindungsgemäße Mehrschichtfolie umfaßt zumindest die vorstehend beschriebene Basisschicht und mindestens eine seidenmatte Deckschicht, welche die vorstehend beschriebene Mischung enthält. Je nach ihrem vorgesehenen Verwendungszweck kann die Mehrschichtfolie eine weitere Deckschicht auf der gegenüberliegenden Seite aufweisen. Gegebenenfalls kann/können auch eine oder mehrere Zwischenschicht/en zwischen der Basis- und der/den Deckschicht/en aufgebracht werden.

Aufbau, Dicke und Zusammensetzung einer zweiten Deckschicht können unabhängig von der bereits vorhandenen erfindungsgemäßen seidenmatten Deckschicht gewählt werden. Bevorzugte Ausführungsformen der Mehrschichtfolie sind dreischichtig, wobei die zweite Deckschicht ebenfalls eine der vorstehend beschriebenen Mischungen enthalten kann, welche aber nicht mit der der ersten Deckschicht identisch sein muß. Die zweite Deckschicht kann jedoch auch jedes andere gängige Deckschichtpolymer enthalten.

Die Dicke der Deckschicht/en ist größer als 0,4 $\mu$m und liegt vorzugsweise im Bereich von 0,8 bis 4 $\mu$m, insbesondere 1 bis 3 $\mu$m, wobei beidseitige Deckschichten gleich oder verschieden dick sein können.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 70 $\mu$m, insbesondere 10 bis 50 $\mu$m, wobei die Basisschicht etwa 50 bis 90 % der Gesamtfoliendicke ausmacht.

Die Dichte der erfindungsgemäßen Folie beträgt mindestens 0,8 g/cm$^3$ und liegt bevorzugt im Bereich von 0,9 bis 0,92 g/cm$^3$.

Zur Verbesserung der Hafteigenschaften der Deckschicht/en ist mindestens eine Oberfläche der Folie corona- oder flammbehandelt, wobei gegebenenfalls die entsprechende Behandlung an beiden Oberflächen vorgenommen werden kann.

Überraschenderweise Zeigte sich, daß die erfindungsgemäßen Folien auch ohne vakuolenbildende Füllstoffe in der Basisschicht eine gegenüber transparenten Folien deutlich erhöhte Trübung aufweisen. Wenn auch ohne Füllstoffe mit dem Verschwinden der opazifizierenden Vakuolen in der Basisschicht zu rechnen war, so konnte dennoch das getrübte Erscheinungsbild der Folie nicht vorhergesehen werden.

Es wurde weiterhin gefunden, daß bei Einarbeitung der oben beschriebenen Polyethylene in eine Polypropylenhomopolymer-, Polypropylencopolymer- bzw. Polypropylenterpolymer-Deckschicht überraschenderweise eine sehr homogene Folienoptik mit der gewünschten seidenmatten Charakteristik erzielt werden konnte. Dieses Ergebnis überraschte umsomehr als Versuche ausgehend von der EP-A-0 367 613 nicht das erwünschte Ergebnis lieferten. Bei der Nacharbeitung der dort beschriebenen Folie, jedoch ohne Füllstoff in der Basisschicht, wurde eine Folie erhalten, deren Basisschicht zwar nicht mehr vakuolenhaltig, d. h. nicht mehr opak war, die jedoch ein fleckiges Aussehen hatte und keine seidenmatte Erscheinung. Die Trübung dieser Folie betrug stellenweise weniger als 10, wenn auch an anderen Punkten Trübungen größer 10 gefunden wurden (nach ASTM-D 1003). Ebenso ungleichmäßig waren die Glanzwerte. Insgesamt wurde keine Folie erhalten, welche nach Glanz, Trübung und der Gleichmäßigkeit ihres Aussehens der Anforderung "seidenmatt" genügte.

Um bestimmte Eigenschaften der erfindungsgemäßen Polyolefinfolie noch weiter zu verbessern, können sowohl die Basisschicht als auch die Deckschicht/en **weitere Zusätze** in einer jeweils wirksamen Menge enthalten, vorzugsweise Antistatika und/oder Antiblockmittel und/oder Gleitmittel und/oder Stabilisatoren und/oder Neutralisationsmittel, die mit den Polymeren der Basisschicht und der Deckschicht/en verträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Bevorzugte **Antistatilka** sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%. Des weiteren wird Glycerinmonostearat in einer Menge von 0,03 % bis 0,2 % bevorzugt als Antistatikum eingesetzt.

**Gleitmittel** sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 mm$^2$/s. Besonders günstig ist der Zusatz der Polydimethylsiloxane in eine oder beide Deckschichten.

Als **Stabilisatoren** können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Geeignete **Antiblockmittel** sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 $\mu$m, insbesondere 2 und 5 $\mu$m, wobei Teilchen mit einer kugelförmigen Gestalt, wie in der EP-A-0 236 945 und der DE-A-38 01 535 beschrieben, besonders geeignet sind. Bevorzugt werden die Antiblockmittel den Deckschichten zugesetzt.

**Neutralisationsmittel** sind vorzugsweise Calciumstearat und/oder Calciumcarbonat einer mittleren Teilchengröße von höchstens 0,7 $\mu$m, einer absoluten Teilchengröße von kleiner 10 $\mu$m und einer spezifischen Oberfläche von mindestens 40 m$^2$/g.

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung ge streckt, was zu einer Orientierung der Molekülketten führt. In Längsrichtung wird vorzugsweise 4:1 bis 7:1 und in Querrichtung vorzugsweise 8:1 bis 10:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 140 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und vertestigt wird, durch einen Heiz- und Kühlkreislauf bei einer Temperatur von 40 bis 100 °C, vorzugsweise 40 bis 60 °C, zu halten.

Die Temperaturen, bei denen Längs- und Querstreckung durchgeführt werden, können in einem relativ großen Bereich variieren und richten sich nach der jeweiligen Zusammensetzung der Deckschichtmischung. Im allgemeinen wird die Längsstreckung vorzugsweise bei 120 bis 150 °C und die Querstreckung vorzugsweise bei 155 bis 190 °C.

Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaffen der behandelten Seite sogar besser sind als diejenigen der nicht behandelten Seite.

Die erfindungsgemäße Mehrschichtfolie zeichnet sich durch eine sehr homogene Folienoptik und einen charakteristischen seidenmatten Glanz aus, durch den die Folie zur Substitution von Acetatfolien überraschend gut geeignet ist. Das seidenmatte Erscheinungsbild unterscheidet sich von herkömmlichen matten Folien in charakteristischer Weise und ist für den einschlägigen Fachmann leicht erkennbar. Dieser seidenmatte Glanz wird durch gleichzeitige Optimierung von Glanz und Trübung der Folie erzielt und durch visuelle Beurteilung durch den Fachmann überprüft. Überraschenderweise zeigen die Folien dann das gewünschte optische Erscheinungsbild 'seidenmatt', wenn die Folie eine möglichst gleichmäßige Optik aufweist und wenn Glanz und Trübung der Folien geringe bzw. hohe Meßwerte haben, aber nicht minimal bzw. maximal sind. Es wurde gefunden, daß Folien mit Glanzwerten (bei einem Meßwinkel von 85°, gemessen nach ASTM-D-523-78) von kleiner 80, vorzugsweise kleiner 60, und einer Trübung (gemessen nach ASTM-D-1003) von größer 10, vorzugsweise größer 30, seidenmatt sind, wobei die jeweiligen Werte für Glanz und Trübung bei einer Ausführungsform nur innerhalb relativ enger Grenzen schwanken, d. h. maximal um 20 %. Besonders gut wird diese Anforderung erfüllt, wenn der Glanz im Bereich von 25 bis 45 (85°, ASTM-D-5237) und die Trübung im Bereich von 40 bis 80, vorzugsweise 50 bis 70, liegen und die Schwankungen von Glanz und Trübung über die gesamte Folie kleiner 10 %, vorzugsweise 1 bis 8 %, betragen.

Die so optimierte seidenmatte Oberfläche erzeugt ein papierähnliches Erscheinungsbild der Folie, welches im Verpackungsbereich für bestimmte Anwendungen besonders wünschenswert ist. Überraschenderweise hat sich erwiesen, daß nicht die Minimierung von Glanz und die Maximierung der Trübung den gewünschten optischen Effekt bringt, sondern daß vielmehr eine ausgewogene Optimierung der Eigenschaften erforderlich ist, welche durch die spezielle Deckschichtzusammensetzung gemäß Anspruch 1 überraschenderweise möglich ist.

Gleichzeitig weist die Mehrschichtfolie eine hervorragende Bedruckbarkeit und ein besonders gleichmäßiges Druckbild auf. Die Oberflächenspannung ist überraschend hoch und fällt auch nach einer mehrmonatigen Lagerzeit nur unwesentlich ab. Des weiteren weisen die erfindungsgemäßen Folien ausgesprochen ungewöhnliche Siegeleigenschaften auf. Diese lassen sich individuell auf das jeweilige Problem und die vorgesehene Anwendung einstellen. Diese Flexibilität eröffnet einen außerordentlich breiten Anwendungsbereich des gleichen Materials in den verschiedensten Gebieten. Durch Auswahl der einzelnen Komponenten für die Deckschichtmischung und deren Verhältnis lassen sich die Siegelanspringtemperaturen, die über einen großen Bereich variieren können, gezielt einstellen. Ebenso variabel ist die Siegelnahtfestigkeit, welche für viele Anwendungen eher groß sein soll. Jedoch ist die erfindungsgemäße Folie auch für neue Einsatzzwecke vorgesehen, bei denen eine große Siegelnahtfestigkeit nachteilig ist. Beispielsweise werden herkömmliche Deckelverschlüsse aus Aluminium zunehmend durch andere Materialien ersetzt, um durch einheitliche Verpackungen aus einer Stoffklasse deren Recyclingfähigkeit zu verbessern. Diese Deckel werden mit dem zu verschließenden Gefäß versiegelt und sollen anschließend wieder problemlos zu öffnen sein. Für diese Zwecke ist eine geringere Siegelnahtfestigkeit gefordert. Zusätzlich weist die Folie eine gute Barrierewirkung gegenüber Wasserdampf auf. Diese Eigenschaft ist für die Verwendung als Deckelverschlußmaterial besonders wichtig, um das enthaltene Gut wirksam vor Feuchtigkeitsverlusten und Austrocknung zu schützen.

Zusammenfassend ist festzustellen, daß sich die erfindungsgemäße Mehrschichtfolie durch eine Vielzahl vorteilhafter Eigenschaften auszeichnet, insbesondere durch

- einen charakteristischen seidenmatten Glanz von kleiner 80 bei einem Meßwinkel von 85° (ASTM-D-523-78),
- eine optimierte Trübung von größer 10 (ASTM-D-1003),
- eine besonders gleichmäßige Folienoptik,
- eine große Rauhigkeit der Oberfläche,
- einen 'relativ' kleinen Reibungskoeffizienten
- eine gute Wasserdampfbarriere,

- eine gute Kurz- und Langzeitbedruckbarkeit,
- eine hohe Oberflächenspannung,
- eine gute Langzeitbeständigkeit der Oberflächenspannung und
- ungewöhnliche Siegelnahteigenschaften, d. h. insbesondere gezielt einstellbare Siegelanspringtemperaturen und Siegelnahtfestigkeiten.

Durch diese überraschende Vielzahl ausgezeichneter Eigenschaften wird erfindungsgemäß eine Folie zur Verfügung gestellt, welche als Ersatzmaterial für Acetatfolien in deren herkömmlichen Anwendungsbereichen hervorragend geeignet ist und die sich darüber hinaus für verschiedenste Verwendungszwecke gleichermaßen hervorragend einsetzen läßt, insbesondere als werbewirksame Mattkaschierfolie oder als Verpackungsfolie auf schnellaufenden Verpakkungsmaschinen oder als neuartiges Deckelverschlußmaterial oder als matte Zigaretteneinschlagfolie, wenn man auf eine Oberflächenbehandlung verzichtet.

Darüber hinaus ist die Folie ausgezeichnet als Trägerfolie für Klebebänder (langzeitbeständige, hohe Oberflächenspannung) oder als Trägerfolie für wäßrige Barrierebeschichtungssysteme, z. B. auf Basis von wäßrigen Dispersionen von Polyvinylidenchlorid- oder Ethylenvinylalkohol-Copolymeren zu verwenden.

Sie läßt sich für verschiedene Zwecke mit wäßrigen Druckfarben bedrucken und weist dabei eine hervorragende Kurz- und Langzeitbedruckbarkeit auf. Aufgrund ihrer guten Sofort- und Langzeitbeschichtbarkeit eignet sich die Folie auch für die Herstellung von Laminaten mit Papier, Pappe, Metallen, metallisierten Kunststoffolien und Kunststoffolien.

Die Erfindung wird nun anhand von Ausführungsbeispielen noch näher erläutert.

Tabelle 1

| (Beispiele 1 bis 11) | | | |
|---|---|---|---|
| | Mischungskomponente I | Mischungskomponente II | I:II |
| B1 | $C_3$-Homopolymerisat | HDPE + $C_3$-Homopolmyerisat | 50:50 |
| B2 | $C_2/C_3$-Copolymerisat | HDPE + $C_3$-Homopolymerisat | 50:50 |
| B3 | $C_2/C_3$-Copolymerisat | HDPE + $C_3$-Homopolymerisat | 70:30 |
| B4 | Tafmer | HDPE + $C_2/C_3$-Copolymerisat | 60:40 |
| B5 | $C_2/C_3$-Copolymerisat | HDPE + $C_2/C_3$-Copolymerisat | 50:50 |
| B6 | $C_2/C_3$-Copolymerisat | HDPE + $C_2/C_3$-Copolymerisat | 70:30 |
| B7 | $C_2/C_3$-Copolymerisat | HDPE + $C_2/C_3/C_4$-Terpolymerisat | 50:50 |
| B8 | $C_2/C_3$-Copolymerisat | HDPE + $C_2/C_3/C_4$-Terpolymerisat | 70:30 |
| B9 | $C_2/C_3$-Copolymerisat | HDPE + Tafmer | 50:50 |
| B10 | $C_2/C_3/C_4$-Terpolymerisat | HDPE + Tafmer | 50:50 |
| B11 | $C_2/C_3/C_4$-Terpolymerisat | HDPE + $C_2/C_3/C_4$-Terpolymerisat | 50:50 |
| B12 | $C_3$-Homopolymerisat | HDPE | 50:50 |
| B13 | $C_2/C_3$-Copolymerisat | HDPE | 50:50 |
| B14 | $C_2/C_3$-Copolymerisat | HDPE | 70:30 |
| B15 | $C_2/C_3/C_4$-Terpolymerisat | HDPE | 50:50 |
| B16 | $C_2/C_3/C_4$-Terpolymerisat | HDPE | 70:30 |
| B = Beispiel | | | |

**Beispiel 1**

Nach dem Coextrusionsverfahren wird aus einer Breitschlitzdüse bei einer Extrusionstemperatur von 260 °C als Summe eine 1 mm dicke Dreischichtfolie mit einem Schichtaufbau XZX extrudiert, d. h. die Basisschicht Z ist von zwei gleichen Deckschichten X umgeben.

Die Basisschicht besteht im wesentlichen aus einem Polypropylenhomopolymerisat mit einem n-heptanlöslichen Anteil von 4,5 Gew.-% und einem Schmelzpunkt von 165 °C. Der Schmelzflußindex des Polypropylenhomopolymeren liegt bei 3,2 g/10 min bei 230 °C und 21,6 N Belastung (DIN 53 735).

Die beiden Deckschichten X bestehen im wesentlichen aus einer mechanischen Mischung aus den Mischungskomponenten I und II im Verhältnis I:II = 50:50. Mischungskomponente I besteht aus einem Polypropylenhomopolymerisat mit einem n-heptanlöslichen Anteil von 4,5 Gew.-% und einem Schmelzpunkt von 165 °C. Der Schmelzflußindex des Polypropylenhomopolymeren liegt bei 6,0 g/10 min bei 230 °C und 21,6 N Belastung (DIN 53 735). Mischungskomponente II besteht aus einem Blend zweier Komponenten A und B im Verhältnis A:B = 50:50. Die Komponente A besteht aus einem HDPE mit einem MFI (50 N/190 °C) von 11 g/10 min (gemessen nach DIN 53 735), einer Viskositätszahl von 160 $cm^3$/g (gemessen nach DIN 53 728, Teil 4), einer Dichte von 0,954 g/$cm^3$ (gemessen nach DIN 53 479, Verfahren A), einem Kristallisationsgrad von 68 % und einem Schmelzpunkt von 132 °C nach DSC-Messung. Die Komponente B besteht aus einem Polypropylenhomopolymerisat mit einem n-heptanlöslichen Anteil von 4,5 Gew.-% und einem Schmelzpunkt von 165 °C. Der Schmelzflußindex der Komponente B liegt bei 7,0 g/10 min bei 230 °C und 21,6 N Belastung (DIN 53 735).

Die Mischungskomponenten I und II werden im Verhältnis I:II = 50:50 in einem Henschel-Mischer 2 min lang bei 500 Upm mechanisch gemischt, so daß eine homogene Granulatmischung resultiert.

Alle Schichten enthalten zur Stabilisierung 0,12 Gew.-% Pentaerythrityl-Tetrakis-4-(3,5-ditertiärbutyl-4-hydroxyphenyl)-propionat ($^{®}$Irganox 1010) sowie als Neutralisationsmittel 0,06 Gew.-% Calciumstearat. Die Basisschicht enthält weiterhin 0,15 Gew.-% an N,N-bis-(2-hydroxyethyl)-($C_{10}$-$C_{20}$)-alkylamin ($^{®}$Armostat 300) als Antistatikum.

Die extrudierte Dreischichtfolie wird über die entsprechenden Verfahrensschritte nach der Coextrusion über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewählt wurden:

| | |
|---|---|
| Extrusion: | Extrusionstemperatur 260 °C |
| | Temperatur der ersten Abzugswalze 50 °C |
| | Temperatur des Walzentrios 50 °C |
| Längsstreckung: | Streckwalze T = 125 °C |
| | Längsstreckung um den Faktor 5 |
| Querstreckung: | Aufheizfelder T = 175 °C |
| | Streckfelder T = 165 °C |
| | Querstreckung um den Faktor 10 |
| Fixierung: | Temperatur T = 155 °C |
| Coronabehandlung: | Spannung: 10 000 V |
| | Frequenz: 10 000 Hz |

Die so hergestellte Mehrschichtfolie hat beidseitig eine seidenmatte Oberfläche und weist direkt nach der Herstellung eine Oberflächenspannung von 40 bis 41 mN/m auf.
Die Folie ist ca. 21,5 μm dick, wobei die Basisschicht 19 μm und jede Deckschicht 1,25 μm Dicke hat.

**Beispiel 2**

Beispiel 1 wird wiederholt. Mischungskomponente I besteht aus einem statistischen Ethylen-Propylen-Copolymeren mit einem Ethylengehalt von 5 Gew.-%, bezogen auf das Gewicht des Copolymeren. Der Schmelzpunkt des Copolymeren liegt bei 134 °C, wobei der Schmelzflußindex 7,0 g/10 min beträgt. Die Wasserdampfbarriere dieses Ausführungsbeispiels beträgt bei einer Foliendicke von 16 μm 1,78 g $m^{-1}$ $d^{-1}$.

**Beispiel 3**

Beispiel 2 wird wiederholt. Das Mischungsverhältnis der beiden Mischungskomponenten I und II beträgt I:II =70:30.

**Beispiel 4**

Beispiel 1 wird wiederholt.
Mischungskomponente I besteht aus einem Polymerblend aus einem Ethylen-Propylen-Butylen-1-Terpolymeren und einem Propylen-Butylen-1-Copolymeren entsprechend einem Gehalt von 0,7 Gew.-% Ethylen, 81,3 Gew.-% Propylen und 18 Gew.-% Butylen, bezogen auf das Polymerblend.
Mischungskomponente II besteht aus einem Blend zweier Komponenten A und B im Verhältnis A:B = 50:50. Die Komponente A besteht aus einem HDPE mit einem MFI (50 N/190 °C) von 11 g/10 min (gemessen nach DIN 53 735), einer Viskositätszahl von 160 $cm^3$/g (gemessen nach DIN 53 728, Teil 4), einer Dichte von 0,954 g/$cm^3$ (gemessen nach DIN 53 479, Verfahren A), einem Kristallisationsgrad von 68 % und einem Schmelzpunkt von 132 °C nach DSC-Messung.

Die Komponente B besteht aus einem statistischen Ethylen-Propylen-Copolymeren mit einem Ethylengehalt von 5 Gew.-%, bezogen auf das Gewicht des Copolymeren. Der Schmelzpunkt des Copolymeren liegt bei 134 °C, wobei der Schmelzflußindex 7,0 g/10 min beträgt.

Das Mischungsverhältnis der beiden Mischungskomponenten I und II beträgt I:II = 60:40.

**Beispiel 5**

Beispiel 4 wird wiederholt. Mischungskomponente I besteht aus einem statistischen Ethylen-Propylen-Copolymeren mit einem Ethylengehalt von 5 Gew.-%, bezogen auf das Gewicht des Copolymeren. Der Schmelzpunkt des Copolymeren liegt bei 134 °C, wobei der Schmelzflußindex 7,0 g/10 min beträgt.

Das Mischungsverhältnis der beiden Mischungskomponenten I und II beträgt I:II = 50:50.

**Beispiel 6**

Beispiel 5 wird wiederholt. Das Mischungsverhältnis der beiden Mischungskomponenten I und II beträgt I:II = 70:30.

**Beispiel 7**

Beispiel 5 wird wiederholt. Mischungskomponente II besteht aus einem Blend zweier Komponenten A und B im Verhältnis A:B = 50:50. Die Komponente A besteht aus einem HDPE mit einem MFI (50 N/190 °C) von 11 g/10 min (gemessen nach DIN 53 735), einer Viskositätszahl von 160 cm$^3$/g (gemessen nach DIN 53 728, Teil 4), einer Dichte von 0,954 g/cm$^3$ (gemessen nach DIN 53 479, Verfahren A), einem Kristallisationsgrad von 68 % und einem Schmelzpunkt von 132 °C nach DSC-Messung. Die Komponente B besteht aus einem Terpolymeren aus Ethylen-, Propylen- und Butylen-1-Einheiten mit einem Ethylengehalt von 1,9 Gew.-% und einem Butylen-1-Gehalt von 8,4 Gew.-%, bezogen auf das Terpolymer.

**Beispiel 8**

Beispiel 7 wird wiederholt. Das Mischungsverhältnis der beiden Mischungskomponenten I und II beträgt I:II = 70:30.

**Beispiel 9**

Beispiel 5 wird wiederholt. Mischungskomponente II besteht aus einem Blend zweier Komponenten A und B im Verhältnis A:B = 50:50. Die Komponente A besteht aus einem HDPE mit einem MFI (50 N/190 °C) von 11 g/10 min (gemessen nach DIN 53 735), einer Viskositätszahl von 160 cm$^3$/g (gemessen nach DIN 53 728, Teil 4), einer Dichte von 0,954 g/cm$^3$ (gemessen nach DIN 53 479, Verfahren A), einem Kristallisationsgrad von 68 % und einem Schmelzpunkt von 132 °C nach DSC-Messung. Die Komponente B besteht aus einem Polymerblend aus einem Ethylen-Propylen-Butylen-1-Terpolymeren und einem Propylen-Butylen-1-Copolymeren entsprechend einem Gehalt von 0,7 Gew.-% Ethylen, 81,3 Gew.-% Propylen und 18 Gew.-% Butylen, bezogen auf das Polymerblend.

**Beispiel 10**

Beispiel 9 wird wiederholt. Mischungskomponente I besteht aus einem Terpolymeren aus Ethylen-, Propylen- und Butylen-1-Einheiten mit einem Ethylengehalt von 1,9 Gew.-% und einem Butylen-1-Gehalt von 8,4 Gew.-%, bezogen auf das Terpolymer.

**Beispiel 11**

Beispiel 7 wird wiederholt. Mischungskomponente I besteht aus einem Terpolymeren aus Ethylen-, Propylen- und Butylen-1-Einheiten mit einem Ethylengehalt von 1,9 Gew.-% und einem Butylen-1-Gehalt von 8,4 Gew.-%, bezogen auf das Terpolymer.

**Beispiel 12**

Beispiel 1 wird wiederholt. Die Mischungskomponente II besteht aus dem reinen HDPE mit einem MFI (50 N/190 °C) von 11 g/10 min (gemessen nach DIN 53 735), einer Viskositätszahl von 160 cm$^3$/g (gemessen nach DIN 53 728, Teil 4), einer Dichte von 0,954 g/cm$^3$ (gemessen nach DIN 53 479, Verfahren A), einem Kristallisationsgrad von 68 % und einem Schmelzpunkt von 132 °C nach DSC-Messung.

**Beispiel 13**

Beispiel 2 wird wiederholt. Die Mischungskomponente II entspricht der des Beispiels 12.

**Beispiel 14**

Beispiel 3 wird wiederholt. Die Mischungskomponente II entspricht der des Beispiels 12.

**Beispiel 15**

Beispiel 11 wird wiederholt. Die Mischungskomponente II entspricht der des Beispiels 12.

**Beispiel 16**

Beispiel 15 wird wiederholt. Das Mischungsverhältnis der beiden Mischungskomponenten I und II beträgt I:II = 70:30.

Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C bzw. bei 50 N Belastung und 190 °C gemessen.

Schmelzpunkt

DSC-Messung, Maximum der Schmelzkurve, Aufheizgeschwindigkeit 20 °C/min.

Viskositätszahl J

Die Viskositätszahl ist ein Maß für die Molmasse. Die Viskositätszahl wird nach DIN 53 728, Teil 4, in 0,1%iger Dekahydronaphthalin-Lösung bei 135 °C gemessen.

Dichte $\sigma$

Die Dichte wird nach DIN 53 479, Verfahren A, bestimmt.

Kristallisationsgrad $\sigma$

Der Kristallisationsgrad läßt sich durch folgende Beziehung ermitteln:

$$\alpha = \frac{\sigma - \sigma_{amorph}}{\sigma_{kristallin} - \sigma_{amorph}} \cdot 100\,\%$$

mit

$\sigma_{amorph}$ = 0,8549 g/cm$^3$
$\sigma_{kristallin}$ = 1,0005 g/cm$^3$
$\sigma$ = Dichte des eingesetzten HDPE-Typs

Trübung

Die Trübung der Folie wurde in Anlehnung an ASTM-D 1003-52 gemessen.

13

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 10 mm$^2$ (Gerät: Brugger Typ NDS, einseitig beheizte Siegelbacke) versiegelt. Die Siegelnahtfestigkeit wurde nach der T-Peel-Methode bestimmt.

Rauhigkeit

Die Rauhigkeit wurde in Anlehnung an DIN 4768 bestimmt.

Reibung

Die Reibung wurde in Anlehnung an DIN 53 375 bestimmt.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Wasserdampfbarriere

Die Wasserdampfbarriere wird in Anlehnung an DIN 53 122 bei 23 °C und 85 % relativer Lufffeuchte gemessen und gibt die pro Quadratmeter und Tag durchgetretene Wassermenge in Gramm an.
In der nachstehenden Tabelle sind die Eigenschaften der Polyolefinfolien der Beispiele zusammengefaßt.

## Tabelle 2

| Bei-spiel | Glanz (ASTM D-523-78) Meßwinkel 85° | Trübung (ASTM 1003) % | Rauhigkeit (c.o. 0,25 mm) μm | Reibungskoeffizient | Oberflächenspannung nach 6 Monaten Lagerung mN/m | visuelle Beurteilung des seidenmatten Erscheinungsbildes (+ + = sehr gut) | Siegelnahtfestigkeit (130 °C, 0,5 s, 10 N/cm²) N/15 mm |
|---|---|---|---|---|---|---|---|
| B1 | 40 | 60 | 2,5 | 0,5 | 38 | + + | - |
| B2 | 32 | 66 | 3,0 | 0,4 | 39 | + + | 0,6 |
| B3 | 42 | 58 | 2,3 | 0,5 | 38 | + + | 1,2 |
| B4 | 38 | 62 | 2,6 | 0,4 | 39 | + + | 3,0 |
| B5 | 30 | 68 | 3,2 | 0,3 | 39 | + + | 1,6 |
| B6 | 38 | 63 | 2,6 | 0,4 | 39 | + + | 1,8 |
| B7 | 32 | 65 | 2,9 | 0,4 | 39 | + + | 2,2 |
| B8 | 38 | 62 | 2,7 | 0,4 | 39 | + + | 2,4 |
| B9 | 34 | 63 | 3,3 | 0,4 | 39 | + + | 2,3 |
| B10 | 36 | 62 | 2,6 | 0,4 | 39 | + + | 2,8 |
| B11 | 35 | 62 | 2,6 | 0,4 | 39 | + + | 2,5 |
| B12 | 31 | 68 | 3,0 | 0,4 | 38 | + + | - |
| B13 | 29 | 70 | 3,2 | 0,3 | 39 | + + | 2,0 |
| B14 | 32 | 66 | 2,8 | 0,3 | 39 | + + | 2,2 |
| B15 | 30 | 68 | 3,0 | 0,3 | 39 | + + | 2,4 |
| B16 | 34 | 64 | 2,8 | 0,4 | 39 | + + | 2,8 |

**Patentansprüche**

1. Polypropylen-Mehrschichtfolie, welche mindestens eine Basisschicht und mindestens eine Deckschicht umfaßt, wobei die Basisschicht Polypropylen mit einem Schmelzpunkt von mindestes 140 C enthält und die Deckschicht eine Mischung zweier Mischungskomponenten I und II enthält, dadurch gekennzeichnet, daß die Mischungskomponente I im wesentlichen

   ein Polypropylenhomopolymeres oder
   ein Copolymeres von

   Ethylen und Propylen oder
   Ethylen und Butylen oder
   Propylen und Butylen oder
   Ethylen und einem anderen "-Olefin mit 5 bis 10 Kohlenstoffatomen oder
   Propylen und einem anderen "-Olefin mit 5 bis 10 Kohlenstoffatomen oder

   ein Terpolymeres von

   Ethylen und Propylen und Butylen oder
   Ethylen und Propylen und einem anderen "-Olefin mit 5 bis 10 Kohlenstoffatomen oder

   eine Mischung aus zwei oder mehreren der genannten Homo-, Co- und Terpolymeren oder
   ein Blend aus zwei oder mehreren der genannten Homo-, Co- und Terpolymeren, gegebenenfalls gemischt mit einem oder mehreren der genannten Homo-, Co- und Terpolymeren,

   enthält und
   die Mischungskomponente II im wesentlichen ein HDPE oder ein Blend zweier Blendkomponenten A und B enthält, wobei
   die Blendkomponente A im wesentlichen

   ein HDPE ist und

   die Blendkomponente B im wesentlichen

   ein Polypropylenhomopolymeres oder
   ein Copolymeres von

   Ethylen und Propylen oder
   Ethylen und Butylen oder
   Propylen und Butylen oder
   Ethylen und einem anderen $\alpha$-Olefin mit 5 bis 10 Kohlenstoffatomen oder
   Propylen und einem anderen $\alpha$-Olefin mit 5 bis 10 Kohlenstoffatomen oder

   ein Terpolymeres von

   Ethylen und Propylen und Butylen oder
   Ethylen und Propylen und einem anderen $\alpha$-Olefin mit 5 bis 10 Kohlenstoffatomen oder

   eine Mischung aus zwei oder mehreren der genannten Homo-, Co- und Terpolymeren oder
   ein Blend aus zwei oder mehreren der genannten Homo-, Co- und Terpolymeren

   ist und die Folie seidenmatt ist.

2. Polypropylen-Mehrschichtfolie nach Anspruch 1, dadurch gekennzeichnet, daß die Mischungskomponente I im wesentlichen

   ein Polypropylenhomopolymeres ist oder
   ein Copolymeres von

Ethylen und Propylen oder
Ethylen und Butylen-1 oder
Propylen und Butylen-1 oder

ein Terpolymeres von

Ethylen und Propylen und Butylen-1 oder

eine Mischung aus zwei oder mehreren der genannten besonders bevorzugten Homo-, Co- Terpolymeren oder
ein Blend aus zwei oder mehreren der genannten besonders bevorzugten Homo-, Co- und Terpolymeren, gegebenenfalls gemischt mit einem oder mehreren der genannten Homo-, Co- und Terpolymeren
wobei insbesondere Polypropylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-% bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von mindestens 50 Gew.-%
und einem Butylen-1-Gehalt von 10 bis 40 Gew.-%,
jeweils bezogen auf das Gesamtgewicht des Polymerblends,

bevorzugt sind, und

die Blendkomponente B im wesentlichen

ein Polypropylenhomopolymeres ist oder
ein Copolymeres von

Ethylen und Propylen oder
Ethylen und Butylen-1 oder
Propylen und Butylen-1 oder

ein Terpolymeres von

Ethylen und Propylen und Butylen-1 oder

eine Mischung aus zwei oder mehreren der genannten besonders bevorzugten Homo-, Co- und Terpolymeren oder
ein Blend aus zwei oder mehreren der genannten besonders bevorzugten Homo-, Co- und Terpolymeren, wobei insbesondere Polypropylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%
jeweils bezogen auf das Gesamtgewicht des Polymerblends,

bevorzugt sind.

3. Polypropylen-Mehrschichtfolie gemäß Anspruch 1 und/oder 2, dadurch gekennzeichnet, daß das HDPE einen MFI (50 N/190 °C) von 0,2 bis 50 g/10 min (gemessen nach DIN 53 735), eine Viskositätszahl von 100 bis 450 cm$^3$/g (gemessen nach DIN 53 728, Teil 4), eine Dichte von 0,93 bis 0,97 g/cm$^3$ (gemessen nach DIN 53 479, Verfahren A), einen Kristallisationsgrad von 35 bis 80 % und einen Schmelzpunkt von 120 bis 150 °C nach DSC-Messung aufweist.

4. Polypropylen-Mehrschichtfolie gemäß einem oder mehreren der Ansprüche 1 bis 3, dadurch gekennzeichnet, daß das Verhältnis der Blendkomponenten A und B im Bereich von A:B = 20:80 bis A:B = 80:20, vorzugsweise zwischen A:B = 40:60 und A:B = 60:40, liegt.

5. Polypropylen-Mehrschichtfolie gemäß einem oder mehreren der Ansprüche 1 bis 4, dadurch gekennzeichnet, daß das Blend einen Schmelzflußindex von 1,5 bis 12 g/10 min, vorzugsweise 2,5 bis 6 g/10 min, (230 °C, 21,6 N Belastung) hat.

6. Polypropylen-Mehrschichtfolie gemäß einem oder mehreren der Ansprüche 1 bis 5, dadurch gekennzeichnet, daß das Verhältnis der Mischungskomponenten I und II im Bereich von I:II = 90:10 bis I:II = 10:90 liegt.

7. Polypropylen-Mehrschichtfolie gemäß einem oder mehreren der Ansprüche 1 bis 6, dadurch gekennzeichnet, daß das Polypropylenpolymere der Basisschicht einen Schmelzpunkt von mindestens 140 °C besitzt und der Schmelzflußindex im Bereich von 0,5 bis 15 g/10 min liegt.

8. Polypropylen-Mehrschichtfolie gemäß einem oder mehreren der Ansprüche 1 bis 7, dadurch gekennzeichnet, daß die Deckschicht und/oder die Basisschicht als Additive Antistatika und/oder Antiblockmittel und/oder Gleitmittel und/oder Stabilisatoren und/oder Neutralisationsmittel enthält/enthalten.

9. Polypropylen-Mehrschichtfolie, dadurch gekennzeichnet, daß mindestens eine äußere Oberfläche der Deckschicht/en seidenmatt ist.

10. Polypropylen-Mehrschichtfoie nach Anspruch 9, dadurch gekennzeichnet, daß sie bei einem Meßwinkel von 85° einen Glanz von kleiner 80, vorzugsweise 25 bis 45, auf der/den beiden matten Seite/n aufweist, gemessen nach ASTM-D 523-78.

11. Polypropylen-Mehrschichtfoie nach Anspruch 9 und/oder 10, dadurch gekennzeichnet, daß sie eine Trübung von größer 10, vorzugsweise 40 bis 80, aufweist, gemessen nach ASTM-D 1003.

12. Verfahren zur Herstellung der Polypropylen-Mehrschichtfolie nach Anspruch 1 oder 10, bei dem die den einzelnen Schichten der Folie entsprechenden Schmelzen durch eine Flachdüse coextrudiert werden, die coextrudierte Folie über eine Abzugswalze, deren Temperatur zwischen 40 und 100 °C liegt, abgezogen wird, die Folie biaxial gestreckt wird mit einem Längsstreckverhältnis von 4:1 bis 7:1 und einem Querstreckverhältnis von 8:1 bis 10:1, die biaxial gestreckte Folie thermofixiert, gegebenenfalls coronabehandelt und anschließend aufgewickelt wird, dadurch gekennzeichnet, daß die Folie mindestens eine seidenmatte Oberfläche aufweist.

13. Verfahren nach Anspruch 12, dadurch gekennzeichnet, daß die Längsstreckung der Folie bei 120 bis 150 °C und die Querstreckung bei 155 bis 190 °C durchgeführt wird.

14. Verwendung der Polypropylen-Mehrschichtfolie gemäß einem oder mehreren der Ansprüche 1 bis 11 als Verpak-kungsfolie.

15. Verwendung der Polypropylen-Mehrschichtfolie gemäß einem oder mehreren der Ansprüche 1 bis 11 als Trägerfolie für eine, gegebenenfalls partielle, Klebeschicht.

16. Verwendung der Polypropylen-Mehrschichtfolie gemäß einem oder mehreren der Ansprüche 1 bis 11 als Trägerfolie für wäßrige Barrierebeschichtungssysteme.

17. Verwendung der Polypropylen-Mehrschichtfolie gemäß einem oder mehreren der Ansprüche 1 bis 11 zur Herstellung von bedruckten Polypropylenfolien.

18. Verwendung der Polypropylen-Mehrschichtfolie gemäß einem oder mehreren der Ansprüche 1 bis 11 zur Herstellung von Laminaten.

19. Verwendung der Polypropylen-Mehrschichtfolie gemäß Anspruch 18 zur Herstellung von Laminaten mit Papier, Pappe, Metallen, metallisierten Kunststoffolien und Kunststoffolien.

20. Verwendung der Polypropylen-Mehrschichtfolie gemäß einem oder mehreren der Ansprüche 1 bis 11 zur Herstellung von Deckelverschlüssen.

21. Verwendung der Polypropylen-Mehrschichtfolie gemäß einem oder mehreren der Ansprüche 1 bis 11 zur Substitution von Acetatfolien.

22. Polypropylen-Mehrschichtfolie gemäß einem oder mehreren der Ansprüche 1 bis 11, dadurch gekennzeichnet, daß eine, gegebenenfalls beide Oberfläche/n mit einer Bedruckung versehen ist/sind.

23. Polypropylen-Mehrschichtfolie gemäß einem oder mehreren der Ansprüche 1 bis 11, dadurch gekennzeichnet, daß eine oder beide Oberfläche/n eine, gegebenenfalls partielle, Klebeschicht enthält/enthalten.

24. Laminate, enthaltend eine Polypropylen-Mehrschichtfolie gemäß einem oder mehreren der Ansprüche 1 bis 11.

25. Verpackungen, enthaltend eine Polypropylen-Mehrschichtfolie gemäß einem oder mehreren der Ansprüche 1 bis 11.

26. Beschichtete Barrieresysteme, enthaltend eine Polypropylen-Mehrschichtfolie gemäß einem oder mehreren der Ansprüche 1 bis 11.

27. Deckelverschluß, enthaltend eine Polypropylen-Mehrschichtfolie gemäß einem oder mehreren der Ansprüche 1 bis 11.

## Claims

1. A multilayer polypropylene film which comprises at least one base layer and at least one outer layer, where the base layer containing polypropylene has a melting point of at least 140°C and the outer layer contains a mixture of two mixture components I and II, wherein
mixture component I essentially comprises

a propylene homopolymer or
a copolymer of

ethylene and propylene or
ethylene and butylene or
propylene and butylene or
ethylene and another $\alpha$-olefin having 5 to 10 carbon atoms or
propylene and another $\alpha$-olefin having 5 to 10 carbon atoms, or

a terpolymer of

ethylene and propylene and butylene or
ethylene and propylene and another $\alpha$-olefin having 5 to 10 carbon atoms, or

a mixture of two or more of said homopolymers, copolymers and terpolymers, or
a blend of two or more of said homopolymers, copolymers and terpolymers, if desired mixed with one or more
of said homopolymers, copolymers and terpolymers, and

mixture component II essentially comprises an HDPE or a blend of two blend components A and B, where blend
component A is essentially an HDPE, and blend component B is essentially

a propylene homopolymer or
a copolymer of

ethylene and propylene or
ethylene and butylene or
propylene and butylene or
ethylene and another $\alpha$-olefin having 5 to 10 carbon atoms or
propylene and another $\alpha$-olefin having 5 to 10 carbon atoms, or

a terpolymer of

ethylene and propylene and butylene or
ethylene and propylene and another $\alpha$-olefin having 5 to 10 carbon atoms, or

a mixture of two or more of said homopolymers, copolymers and terpolymers, or
a blend of two or more of said homopolymers, copolymers and terpolymers,

and the film has a silk-matt finish.

2. A multilayer polypropylene film as claimed in claim 1, wherein
mixture component I is essentially

a propylene homopolymer or
a copolymer of

ethylene and propylene or
ethylene and 1-butylene or
propylene and 1-butylene, or

a terpolymer of

ethylene and propylene and 1-butylene, or

a mixture of two or more of said particularly preferred homopolymers, copolymers and terpolymers, or
a blend of two or more of said particularly preferred homopolymers, copolymers and terpolymers, if desired
mixed with one or more of said homopolymers, copolymers and terpolymers,
particular preference being given to propylene homopolymers or

random ethylene-propylene copolymers having

an ethylene content of from 2 to 10% by weight, preferably from 5 to 8% by weight, or

random propylene-1-butylene copolymers having

a butylene content of from 4 to 25% by weight, preferably from 10 to 20% by weight,

in each case based on the total weight of the copolymer, or
random ethylene-propylene-1-butylene terpolymers having

an ethylene content of from 1 to 10% by weight, preferably from 2 to 6% by weight, and
a 1-butylene content of from 3 to 20% by weight, preferably from 8 to 10% by weight, in each case based on the total weight of the terpolymer, or

a blend of an ethylene-propylene-1-butylene terpolymer and a propylene-1-butylene copolymer

having an ethylene content of from 0.1 to 7% by weight and a propylene content of at least 50% by weight and a 1-butylene content of from 10 to 40% by weight, in each case based on the total weight of the polymer blend, and

blend component B is essentially a propylene homopolymer or
a copolymer of

ethylene and propylene or
ethylene and 1-butylene or
propylene and 1-butylene, or

a terpolymer of

ethylene and propylene and 1-butylene, or

a mixture of two or more of said particularly preferred homopolymers, copolymers and terpolymers, or
a blend of two or more of said particularly preferred homopolymers, copolymers and terpolymers, particular preference being given to propylene homopolymers or

random ethylene-propylene copolymers having an ethylene content of from 2 to 10% by weight, preferably from 5 to 8% by weight, or

random propylene-1-butylene copolymers having

a butylene content of from 4 to 25% by weight, preferably from 10 to 20% by weight,

in each case based on the total weight of the copolymer, or
random ethylene-propylene-1-butylene terpolymers having

an ethylene content of from 1 to 10% by weight, preferably from 2 to 6% by weight, and
a 1-butylene content of from 3 to 20% by weight, preferably from 8 to 10% by weight,
in each case based on the total weight of the terpolymer, or

a blend of an ethylene-propylene-1-butylene terpolymer and a propylene-1-butylene copolymer

having an ethylene content of from 0.1 to 7% by weight and a propylene content of from 50 to 90% by weight and a 1-butylene content of from 10 to 40% by weight, in each case based on the total weight of the polymer blend.

3. A multilayer polypropylene film as claimed in claim 1 and/or 2, wherein the HDPE has an MFI (50 N/190°C) of from 0.2 to 50 g/10 min (measured in accordance with DIN 53 735), a viscosity index of from 100 to 450 cm$^3$/g (meas-

ured in accordance with DIN 53 728, Part 4), a density of from 0.93 to 0.97 g/cm$^3$ (measured in accordance with DIN 53 479, Method A), a degree of crystallization of from 35 to 80% and a melting point of from 120 to 150°C according to DSC measurement.

4. A multilayer polypropylene film as claimed in one or more of claims 1 to 3, wherein the ratio between blend components A and B is in the range from A:B = 20:80 to A:B = 80:20, preferably between A:B = 40:60 and A:B = 60:40.

5. A multilayer polypropylene film as claimed in one or more of claims 1 to 4, wherein the blend has a melt flow index of from 1.5 to 12 g/10 min, preferably from 2.5 to 6 g/10 min (230°C, load of 21.6 N).

6. A multilayer polypropylene film as claimed in one or more of claims 1 to 5, wherein the ratio between mixture components I and II is in the range from I:II = 90:10 to I:II = 10:90.

7. A multilayer polypropylene film as claimed in one or more of claims 1 to 6, wherein the polypropylene polymer of the base layer has a melting point of at least 140°C and the melt flow index is in the range from 0.5 to 15 g/10 min.

8. A multilayer polypropylene film as claimed in one or more of claims 1 to 7, wherein the outer layer and/or the base layer contain, as additives, antistatics and/or antiblocking agents and/or lubricants and/or stabilizers and/or neutralizers.

9. A multilayer polypropylene film, wherein at least one outer surface of the outer layer(s) has a silk-matt finish.

10. A multilayer polypropylene film as claimed in claim 9, which has a sheen of less than 80, preferably from 25 to 45, on one or both matt sides, measured in accordance with ASTM-D 523-78, at a measurement angle of 85°.

11. A multilayer polypropylene film as claimed in claim 9 and/or 10, which has a haze of greater than 10, preferably from 40 to 80, measured in accordance with ASTM-D 1003.

12. A process for the production of a multilayer polypropylene film as claimed in claim 1 or 10, in which the melts corresponding to the individual layers of the film are coextruded through a flat-film die, the coextruded film is taken off over a take-off roll whose temperature is between 40 and 100°C, the film is biaxially stretched at a longitudinal stretching ratio of from 4:1 to 7:1 and a transverse stretching ratio of from 8:1 to 10:1, the biaxially stretched film is thermofixed, if desired corona-treated and subsequently wound up, wherein the film has at least one surface with a silk-matt finish.

13. The process as claimed in claim 12, wherein the longitudinal stretching of the film is carried out at from 120 to 150°C and the transverse stretching is carried out at from 155 to 190°C.

14. The use of a multilayer polypropylene film as claimed in one or more of claims 1 to 11 as a packaging film.

15. The use of a multilayer polypropylene film as claimed in one or more of claims 1 to 11 as a base film for an adhesive layer, if desired a partial adhesive layer.

16. The use of a multilayer polypropylene film as claimed in one or more of claims 1 to 11 as a base film for aqueous barrier coating systems.

17. The use of a multilayer polypropylene film as claimed in one or more of claims 1 to 11 for the production of printed polypropylene films.

18. The use of a multilayer polypropylene film as claimed in one or more of claims 1 to 11 for the production of laminates.

19. The use of a multilayer polypropylene film as claimed in claim 18 for the production of laminates with paper, cardboard, metals, metallized plastic films and plastic films.

20. The use of a multilayer polypropylene film as claimed in one or more of claims 1 to 11 for the production of lid closures.

21. The use of a multilayer polypropylene film as claimed in one or more of claims 1 to 11 for replacement of acetate films.

22. A multilayer polypropylene film as claimed in one or more of claims 1 to 11, wherein one or if desired both surfaces are printed.

23. A multilayer polypropylene film as claimed in one or more of claims 1 to 11, wherein one or both surfaces have an adhesive layer, if desired a partial adhesive layer.

24. A laminate containing a multilayer polypropylene film as claimed in one or more of claims 1 to 11.

25. A package containing a multilayer polypropylene film as claimed in one or more of claims 1 to 11.

26. A coated barrier system containing a multilayer polypropylene film as claimed in one or more of claims 1 to 11.

27. A lid closure containing a multilayer polypropylene film as claimed in one or more of claims 1 to 11.

**Revendications**

1. Feuille multicouche de polypropylène, qui comporte au moins une couche de base et au moins une couche de finition, la couche de base contenant du polypropylène ayant un point de fusion d'au moins 140°C, et la couche de finition contenant un mélange des deux composants de mélange I et II, caractérisée en ce que :
    le composant de mélange I contient essentiellement :

    un homopolymère de polypropylène, ou
    un copolymère

        d'éthylène et de polypropylène, ou
        d'éthylène et de butylène, ou
        de propylène et de butylène, ou
        d'éthylène et d'une $\alpha$-oléfine ayant de 5 à 10 atomes de carbone, ou
        de propylène et d'une autre $\alpha$-oléfine ayant de 5 à 10 atomes de carbone, ou

    un terpolymère

        d'éthylène et de propylène et de butylène, ou
        d'éthylène et de propylène et d'une autre $\alpha$-oléfine ayant de 5 à 10 atomes de carbone, ou

    un mélange d'au moins deux ou plusieurs des homo-, co- et terpolymères ci-dessus, ou
    un mélange homogène d'au moins deux ou plusieurs des homo-, co- et terpolymères mentionnés, éventuellement en mélange avec un ou plusieurs des homo-, co- et terpolymères mentionnés, et

        le composant de mélange II contient pour l'essentiel un PEHD ou un mélange de deux constituants de mélange A et B, auquel cas,
        le composant de mélange A est essentiellement

    un PEHD, et

        le composant de mélange B est pour l'essentiel

    un homopolymère de polypropylène, ou
    un copolymère

        d'éthylène et de polypropylène, ou
        d'éthylène et de butylène, ou
        de propylène et de butylène, ou
        d'éthylène et d'une autre $\alpha$-oléfine ayant de 5 à 10 atomes de carbone, ou
        de propylène et d'une autre $\alpha$-oléfine ayant de 5 à 10 atomes de carbone, ou

un terpolymère

d'éthylène et de propylène et de butylène, ou
d'éthylène et de propylène et d'une autre $\alpha$-oléfine ayant de 5 à 10 atomes de carbone, ou

un mélange de deux ou plusieurs des homo-, co- et ter-polymères mentionnés, ou
un mélange (blend) de deux ou plusieurs des homo-, co- et terpolymères mentionnés,

et la feuille est satinée mate.

2. Feuille multicouche de polypropylène selon la revendication 1, caractérisée en ce que le composant de mélange I est pour l'essentiel :

un homopolymère du polypropylène, ou
un copolymère

d'éthylène et de polypropylène, ou
d'éthylène et de butylène-1, ou
de propylène et de butylène-1, ou encore

un terpolymère

d'éthylène et de propylène et de butylène-1, ou encore

un mélange d'au moins deux ou plusieurs des homo-, co- et terpolymères particulièrement préférés mentionnés ci-dessus, ou encore
un mélange d'au moins deux ou plusieurs des homo-, co- et terpolymères particulièrement préférés, éventuellement en mélange avec un ou plusieurs des homo-, co- et terpolymères mentionnés,

auquel cas on préfère en particulier un homopolymère de polypropylène, ou

un copolymère statistique éthylène-propylène

ayant une teneur en éthylène de 2 à 10 % en poids et de préférence de 5 à 8 % en poids, ou

un copolymère statistique propylène-butylène-1

ayant une teneur en butylène de 4 à 25 % en poids et de préférence de 10 à 20 % en poids, ou

dans chaque cas par rapport au poids total du copolymère, ou

un terpolymère statistique éthylène-propylènebutylène-1

ayant une teneur en éthylène de 1 à 10 % en poids et de préférence de 2 à 6 % en poids et une teneur en butylène-1 de 3 à 20 % en poids et de préférence de 8 à 10 % en poids,

dans chaque cas par rapport au poids total du terpolymère, ou

un mélange d'un terpolymère éthylène-propylènebutylène-1 et d'un copolymère propylène-butylène-1

ayant une teneur en éthylène de 0,1 à 7 % en poids, et
**une teneur en propylène d'au moins 50 % en poids,** et
une teneur en butylène-1 de 10 à 40 % en poids,

dans tous les cas par rapport au poids total du mélange homogène de polymères, et
le composant de mélange B est pour l'essentiel :

un homopolymère du polypropylène, ou

un copolymère

d'éthylène et de propylène, ou
d'éthylène et de butylène-1, ou
de propylène et de butylène-1, ou

un terpolymère,

d'éthylène, de propylène et de butylène-1, ou

un mélange de deux des homo-, co- et terpolymères particulièrement préférés, mentionnés ci-dessus, ou un mélange deux des homo-, co- et terpolymères mentionnés ci-dessus comme étant particulièrement préférés,

où on préfère en particulier l'homopolymère du polypropylène ou

les copolymères statistiques éthylène-propylène

ayant une teneur en éthylène de 2 à 10 % en poids et de préférence de 5 à 8 % en poids, ou

les copolymères statistiques propylène-butylène-1

ayant une teneur en butylène de 4 à 25 % en poids, de préférence de 10 à 20 % en poids,

dans chaque cas par rapport au poids total du copolymère, ou

les terpolymères statistiques éthylène-propylènebutylène-1

ayant une teneur en éthylène de 1 à 10 % en poids et de préférence de 2 à 6 % en poids, et une teneur en butylène-1 de 3 à 20 % en poids et de préférence de 8 à 10 % en poids,

dans chaque cas par rapport au mélange total du terpolymère, ou

un mélange homogène d'un terpolymère éthylènepropylène-butylène-1 et d'un copolymère propylènebutylène-1

ayant une teneur en éthylène de 0,1 à 7 % en poids, et
une teneur en propylène de 50 à 90 % en poids, et
une teneur en butylène-1 de 10 à 40 % en poids,

dans chaque cas par rapport au poids total du mélange homogène de polymères.

3. Feuille multicouche de polypropylène selon la revendication 1 et/ou 2, caractérisée en ce que le PEHD a un indice de fluidité MFI (50 N/190°C) de 0,2 à 50 g/10 min (mesurée selon DIN 53 735), un indice de viscosité de 100 à 450 $cm^3$/g (mesuré selon DIN 53 728, partie 4), une masse volumique de 0,93 à 0,97 g/$cm^3$ (mesurée selon DIN 53 479, procédé A), un degré de cristallisation de 35 à 80 % et un point de fusion de 120 à 150°C, mesuré par ATD.

4. Feuille multicouche de polypropylène selon l'une ou plusieurs des revendications 1 à 3, caractérisée en ce que le rapport des composants du mélange homogène A et B est compris dans l'intervalle A:B = 20:80 à A:B = 80:20, de préférence de A:B = 40:60 à A:B = 60:40.

5. Feuille multicouche de polypropylène selon l'une ou plusieurs des revendications 1 à 4, caractérisée en ce que le mélange a un indice de fluidité de 1,5 à 12 et de préférence de 2,5 à 6 g/10 min (230°C, charge 21,6 N).

6. Feuille multicouche de polypropylène selon l'une ou plusieurs des revendications 1 à 5, caractérisée en ce que le rapport des composants de mélange I et II est com-pris dans l'intervalle I:II = 90:10 à I:II = 10:90.

7. Feuille multicouche de polypropylène selon l'une ou plusieurs des revendications 1 à 6, caractérisée en ce que le polymère de polypropylène de la couche de base a un point de fusion d'au moins 140°C, avec un indice de fluidité compris dans l'intervalle de 0,5 à 15 g/10 min.

8. Feuille multicouche de polypropylène selon l'une ou plusieurs des revendications 1 à 7, caractérisée en ce que la couche de finition et/ou la couche de base contient en tant qu'additifs des antistatiques et/ou des agents anti-adhérence de contact et/ou des lubrifiants et/ou des stabilisants, et/ou des agents de neutralisation.

9. Feuille multicouche de polypropylène, caractérisée en ce qu'au moins une surface extérieure de la ou des couches de finition est satinée mate.

10. Feuille multicouche de polypropylène selon la revendication 9, caractérisée en ce qu'elle a, pour un angle de mesure de 85°, un brillant inférieur à 80 et de préférence de 25 à 45 sur la ou les faces mates, mesuré selon ASTM D-523-78.

11. Feuille multicouche de polypropylène selon la revendication 9 et/ou 10, caractérisée en ce qu'elle présente un trouble supérieur à 10 et de préférence de 40 à 80, mesuré selon ASTM-D 1003.

12. Procédé de fabrication d'une feuille multicouche de polypropylène selon la revendication 1 ou 10, dans lequel les masses fondues correspondant aux différentes couches de la feuille sont coextrudées à travers une filière plate, la feuille coextrudée est tirée sur un cylindre de tirage dont la temperature est comprise entre 40 et 100°C, la feuille est soumise à un étirage biaxial avec un rapport d'étirage longitudinal de 4:1 à 7:1 et un rapport d'étirage transversal de 8:1 à 10:1, la feuille ayant subi un étirage biaxial est soumise à un thermo-fixage, éventuellement soumise à un traitement corona et finalement enroulée, caractérisé en ce que la feuille possède au moins une surface satinée mate.

13. Procédé selon la revendication 12, caractérisé en ce que l'étirage longitudinal de la feuille est réalisé à une température de 120 à 150°C et l'étirage transversal à une température de 155 à 190°C.

14. Utilisation de la feuille multicouche de polypropylène selon l'une ou plusieurs des revendications 1 à 11 en tant que feuille d'emballage.

15. Utilisation de la feuille multicouche de polypropylène selon l'une ou plusieurs des revendications 1 à 11 en tant que feuille support pour une couche adhésive éventuellement partielle.

16. Utilisation de la feuille multicouche de polypropylène selon l'une ou plusieurs des revendications 1 à 11, en tant que feuille support pour des systèmes aqueux d'enduction à effet barrière.

17. Utilisation de la feuille multicouche de polypropylène selon l'une ou plusieurs des revendications 1 à 11, pour fabriquer des feuilles de polypropylène impri-mées.

18. Utilisation de la feuille multicouche de polypropylène selon l'une ou plusieurs des revendications 1 à 11 pour fabriquer des stratifiés.

19. Utilisation de la feuille multicouche de polypropylène selon la revendication 18, pour fabriquer des stratifiés avec du papier, du carton, des métaux, des feuilles plastiques métallisées et des feuilles plasti-ques.

20. Utilisation de la feuille multicouche de polypropylène selon l'une ou plusieurs des revendications 1 à 11 pour fabriquer des couvercles de fermeture.

21. Utilisation de la feuille multicouche de polypropylène selon l'une ou plusieurs des revendications 1 à 11 pour remplacer les feuilles d'acétate.

22. Feuille multicouche de polypropylène selon l'une ou plusieurs des revendications 1 à 11 caractérisée en ce que l'une de ses surfaces, éventuellement les deux, sont pourvues d'une impression.

23. Feuille multicouche de polypropylène selon l'une ou plusieurs des revendications 1 à 11 caractérisée en ce que l'une de ses surfaces, ou les deux, contiennent une couche adhésive éventuellement partielle.

24. Stratifiés contenant une feuille multicouche de polypropylène selon l'une ou plusieurs des revendications 1 à 11.

25. Emballages contenant une feuille multicouche de polypropylène selon l'une ou plusieurs des revendications 1 à 11.

26. Systèmes enduits à effet barrière, contenant une feuille multicouche de polypropylène selon l'une ou plusieurs des revendications 1 à 11.

27. Couvercle de fermeture, contenant une feuille multicouche de polypropylène selon l'une ou plusieurs des revendications 1 à 11.